# EUROPÄISCHE PATENTSCHRIFT

(11) **EP 1 109 277 B1**
(45) Veröffentlichungstag und Bekanntmachung des Hinweises auf die Patenterteilung: **29.06.2011**
(21) Anmeldenummer: 00126173.4
(22) Anmeldetag: 30.11.2000
(51) Int. Cl.: H02B 1/04

(54) **Verbindungselement für zwei nebeneinander angereihte, mit ihren Breitseiten aneinanderliegende Installationsgeräte, und Verfahren zur Verbindung der Installationsgeräte**
Coupling element for two, mounted side by side, installation apparatuses, and method for the connection of installation apparatuses
Elément d'accouplement de deux appareils électriques montés côte-à-côte, et méthode d'accouplement d'appareillages électriques

(30) Priorität: 18.12.1999 DE 19961242
(43) Veröffentlichungstag der Anmeldung: 20.06.2001
(73) Patentinhaber: ABB AG, 68309 Mannheim (DE)
(72) Erfinder: Eppe, Klaus-Peter, 69429 Waldbrunn (DE); Schmitt, Volker, 69246 Bammental (DE); Weber, Ralf, 69123 Heidelberg (DE); Orban, Alexander, 69469 Weinheim (DE)

(56) Entgegenhaltungen:
- DE-U- 1 858 951
- DE-U- 7 900 929

## Beschreibung

Die Erfindung betrifft ein Verbindungselement gemäß dem Oberbegriff des Anspruches 1, und ein Verfahren nach dem Oberbegriff des Anspruches 7.

Ein einpoliger elektrischer Leitungsschutzschalter besitzt ein Gehäuse, das schalenförmig ausgebildet ist, wobei die Stirnkanten der Schalenwände gegeneinandergelegt werden; die Fixierung der beiden Schalen zueinander erfolgt mittels Nietverbindungen.

Solche einpoligen Leitungsschutzschalter können zu mehrpoligen zusammengesetzt werden. Bekannt ist, die einzelnen Pole miteinander zu vernieten.

Solche Nietverbindungen sind technisch aufwendig, weil sie einerseits eine Lagerhaltung für die Niete bedingen und andererseits ein Arbeitsgang vorzusehen ist, mit dem die Vernietung vorgenommen wird.

In der DE 7900929 U ist ein Verbindungselement gezeigt mit einem etwa zylindrischen Grundkörper mit einem ersten Außendurchmesser, an dem beidseitig zwei radial auffedernde, axial in entgegengesetzte Richtungen vorspringende Spreizarme angeformt sind, deren radiale Außenkontur eine Zylinderfläche darstellt und deren freie Ende auf entgegengesetzt liegenden Mantellinien radial vorspringende Nasen aufweisen, die im montierten Zustand hinter Rücksprüngen an den mit dem Verbindungsteil zu verbindenden Gehäusen der Installationsgeräte einrasten.

Die Montage, d. h. das Verfahren zur Montage zweier Installationsgeräte mit einem solchen Verbindungselement ist einfach: man steckt das Verbindungselement mit den Spreizarmen in das eine Gehäuse und stülpt das andere Gehäuse über die aus diesem einen Gehäuse herausstehenden Spreizarme, wodurch die Verbindung der beiden Installationsgeräte hergestellt ist. Diese Art der Verbindung ist, was den Montageaufwand betrifft, sehr einfach und ohne Werkzeug durchzuführen.

Aufgabe der Erfindung ist es, ein Verbindungselement der eingangs genannten Art zu schaffen, bei dem der Verbindungsvorgang zweier miteinander zu verbindenden Installationsgeräte weiter vereinfacht ist, insbesondere hinsichtlich der Zentrierung nebeneinanderliegender Installationsgeräte.

Diese Aufgabe wird erfindungsgemäß gelöst durch die Merkmale des Anspruches 1.

Gemäß der Erfindung besitzt das Verbindungselement eine Hülsenform, die einen durchgängigen axialen Langsschlitz aufweist, der mittig zwischen den beiden Mantellinien angeordnet ist. Mit dieser Ausgestaltung ist auch der Grundkörper federnd, so daß er zur Zentrierung der nebeneinanderliegenden Installationsgeräte dient.

Bei Verbindung zweier oder mehrerer Leitungsschutzschalter zu einem mehrpoligen Gerät sind zusätzliche Arbeitsgänge, die zum Aufeinanderlegen der Schalter notwendig wären, nicht mehr erforderlich.

Auf diese Weise werden mittels dieses einen Längsschlitzes die Spreizarme auf einer Seite voneinander getrennt; daran angepaßt sind zur Bildung der Spreizarme diametral gegenüber des Längsschlitzes im Bereich der Spreizarme weitere Schlitze eingebracht.

Damit die Montage der Verbindungselemente vereinfacht ist, sind die freien Enden der Arme mit den Nasen konisch zugespitzt, so daß der Durchmesser der Hülsenform an den Enden kleiner ist als der Durchmesser im Bereich der Nasen.

Damit Toleranzen in den Gehäusen ausgeglichen werden, ist die Übergangsfläche des Grundkörpers zu den Spreizarmen und die Übergangsfläche von den Spreizarmen zu den Nasen jeweils konisch ausgebildet, wobei der Konuswinkel geringfügig kleiner als 180° ist.

Dadurch wird erreicht, daß auch bei ungünstiger Toleranzlage der Rücksprung an den Nasen anliegt.

Damit das Verbindungselement zwischen den beiden Gehäusen festgehalten bleibt, kann zur Festlegung ein ins Innere der Hülsenform einsetzbarer Zapfen vorgesehen sein. Der Zapfen verhindert ein Aufeinanderzufedern der Längskanten des Längsschlitzes bzw. der Spreizarme. Wenn z. B. ein Hilfsschalter an einem Schaltgerät festgelegt werden soll, ist ein solcher Zapfen meist nicht erforderlich. Schlußendlich ist ein Zapfen dann nicht erforderlich, wenn die Elastizität des Verbindungselementes nicht groß, d. h. das Verbindungselement relativ steif ist.

Anhand der Zeichnung, in der ein Ausführungsbeispiel der Erfindung dargestellt ist, sollen die Erfindung sowie weitere vorteilhafte Ausgestaltungen und Verbesserungen und weitere Vorteile näher erläutert und beschrieben werden.
- Fig. 1: eine Teilschnittansicht zweier Installationsgeräte mit einem Verbindungsele- ment, in perspektivischer Darstellung, und
- Fig. 2: eine Längsschnittansicht durch das Verbindungselement.

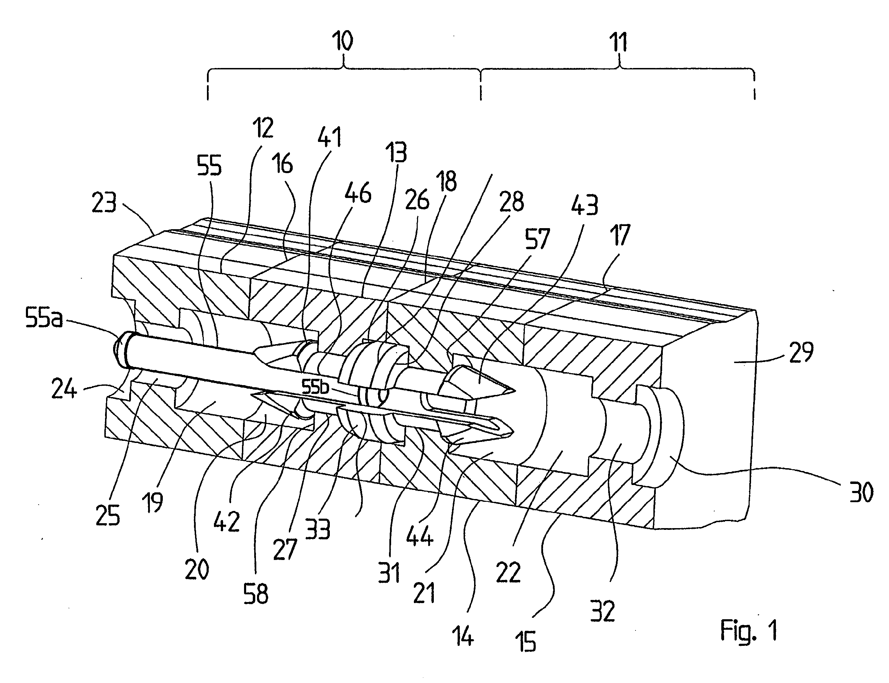

Die Fig. 1 zeigt in Teil-Schnittansicht zwei nebeneinander angeordnete Gehäuse 10 und 11 eines Installationsschaltgerätes, wobei jedes Gehäuse 10, 11 aus zwei schalenförmigen Gehäuseteilen 12, 13 sowie 14, 15 zusammengesetzt ist, wobei die Teilungsfuge zwischen den Gehäuseteilen 12 und 13 die Bezugsziffer 16 und die Teilungsfuge zwischen den Gehäuseteilen 14 und 15 die Bezugsziffer 17 trägt. Die Berührungsfläche der beiden Gehäuse 10, 11 ist mit 18 bezeichnet.

Ausgehend von den Trennfugen 16, 17 besitzt jedes Gehäuseteil eine zylindrische Vertiefung 19, 20 bzw. 21, 22, die im zusammengebauten Zustand, wenn die beiden Gehäuseteile 12, 13 bzw. 14, 15 aneinandergesetzt sind, miteinander einen zylindrischen Innenraum bilden. An der Breitseite 23 des Gehäuseteiles 12 befindet sich eine Vertiefung 24, die mit der Vertiefung 19 durch einen Durchbruch 25 verbunden ist. In ähnlicher Weise besitzt die Breitseite des Gehäuseteiles 13, die die Trennfuge bzw. Berührungsfläche 18 bildet, eine in diese Fläche einmündende Vertiefung 26, die mit der Vertiefung 20 durch ein Durchgangsloch 27 verbunden ist.

Zwischen der Vertiefung 28 bzw. der zur Breitseite 29 hin offenen Vertiefung 30 befindet sich jeweils ebenfalls ein Durchgangsloch 31, 32, wobei die Vertiefungen 19, 20, 21 und 22, 24 und 30 ebenso wie die Durchgangslöcher 25, 27, 31, 32 miteinander fluchten.

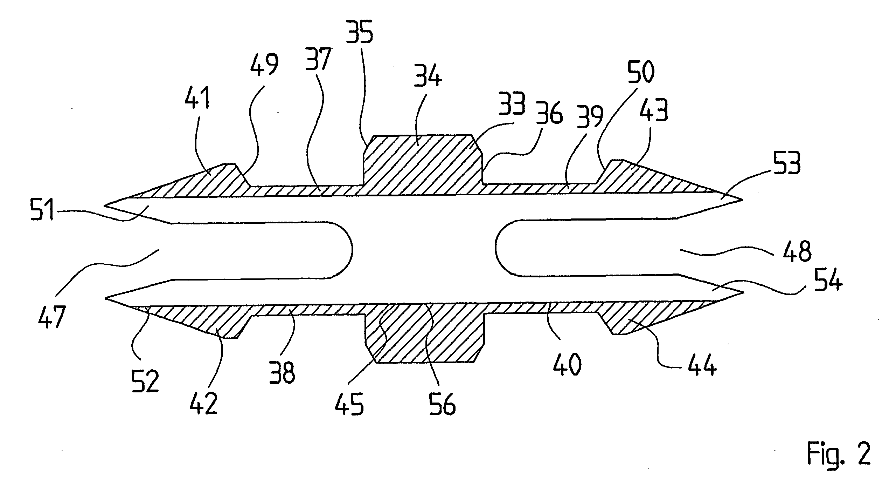

In diese Vertiefungen bzw. Durchgangslöcher ist ein Verbindungselement 33 eingesetzt, das in der Fig. 2 im Schnitt dargestellt ist.

Das Verbindungselement 33 besitzt einen mittig liegenden zylindrischen Grundkörper 34, von dessen Stirnseiten 35 und 36 in axialer Richtung vorspringende federnde Spreizarme 37, 38, 39 und 40. Der Außendurchmesser des Grundkörpers 34 ist so gewählt, daß er in die Vertiefungen 26, 28 hineinpaßt. Die die Spreizarme 37 bis 40 umhüllende Zylinderfläche besitzt einen Außendurchmesser, der dem Innendurchmesser der Durchgangslöcher 25, 27, 31 und 32 entspricht. An den Spreizarmen 37 bis 40 sind jeweils Nasen 41, 42, 43 und 44 angeformt, die radial in entgegengesetzte Richtung vorspringen und auf diametral sich gegenüberliegenden Mantellinie oder Mantelflächen liegen.

Aus der Fig. 1 ist ersichtlich, daß die Nasen 41, 42, 43 und 44 eine Außenfläche aufweisen, die eine Kegelform oder Kegelstumpfform bildet, wobei sich die Kegelstümpfe zu den freien Enden der Spreizarme 37, 38, 39 und 40 hin verjüngen.

Die Spreizarme 37, 38, 39 und 40 sowie der Grundkörper 34 ist von einer Längsbohrung 45 durchgriffen, so daß sich hieraus eine Hülsenform für das Verbindungselement ergibt. Diese Hülsenform besitzt einen Längsschlitz 46, und zusammen mit den Schlitzen 47 und 48, die etwa bis in die Richtung des Grundkörpers 34 hineinragen, werden die federnden Spreizarme 37 bis 40 gebildet.

Man erkennt aus Fig. 2, daß die Stirnwände 35 und 36 eine Konusform bilden, deren offene Seite gegeneinandergerichtet sind; der Konuswinkel beträgt dabei geringfügig weniger als 180°. Es ist ein sehr stumpfer Konuswinkel.

Die Nasen 41 bis 44 besitzen auf ihren den Stirnflächen 35 und 36 gegenüberliegenden Flächen 49 und 50 ebenfalls eine Konusform, die zum freien Ende hin offen ist und ebenfalls einen ähnlichen Öffnungswinkel besitzt wie die Stirnflächen 35 und 36.

Diese Konusflächen 35, 36; 49, 50 dienen dazu, Toleranzen der Längserstreckung der Bohrungen 25, 27, 31 und 32 sowie Toleranzen in den Durchmessern auszugleichen.

Die Fig. 2 zeigt ebenso wie die Fig. 1 - daß die Schlitze 47 und 48 bzw. der Längsschlitz 46 im Bereich der Nasen eine Erweiterung 51, 52, 53 und 54 aufweist. Diese Erweiterungen dienen dazu, einen Zapfen 55 in die Durchgangsbohrung 56 einzufügen, der verhindert, daß die Hülsenform des Verbindungselementes federnd nach innen nachgibt, in dem die sich gegenüberliegenden Kanten des Längsschlitzes aufeinanderzufedern. Der Zapfen 55 ist insoweit ein Verriegelungselement.

Zur Montage werden zunächst die beiden Gehäuseteile 12, 13 bzw. 14, 15 zusammengesetzt zu jeweils einem Installationsgerät 10 bzw. 11. Danach wird das Verbindungselement mit den Spreizarmen 39, 40 durch die Durchgangsöffnung 31 hindurchgesteckt; sobald sie durch die Durchgangsöffnung 31 hindurchgeglitten sind, hintergreifen sie den an die Durchgangsöffnung anschließenden Rücksprung 57.

Zur Befestigung des anderen Installationsgerätes 10 wird dieses mit der Öffnung 27 über die Nasen 41, 42 gesteckt, so lange bis die Nasen hinter den Rücksprung 58 der Durchgangsöffnung 27 hindurchgreifen. Sodann kann der Zapfen 55 ins Innere des Verbindungselementes eingeschoben werden und es wird verhindert, daß die Spreizarme 37 bis 40 aufeinanderzufedern.

Der Zapfen 55 besitzt an seinen freien Enden jeweils eine umlaufender Verdickung 55a, 55b, durch die auch hier Toleranzen ausgeglichen werden können.

In den Fig. 1 und 2 ist lediglich ein Verbindungselement dargestellt. Zur Verbindung zweier nebeneinanderliegender Installationsgeräte beispielsweise zweier Leitungsschutzschalter zu einem zweipoligen Leitungsschutzschalter wären dann drei oder vier Verbindungselemente erforderlich.

Aus dem zweipoligen Leitungsschutzschalter mit den beiden Polen 10, 11 könnte auch ein dreipoliger hergestellt werden. Zu diesem Zweck wird ein Verbindungselement 33 mit den Spreizarmen 37, 38 durch die Öffnung 32 hindurchgesteckt, bis die Nasen 41, 42 in der Vertiefung 22 einrasten; sodann wird ein weiteres Schaltgerät über die Rastarme 39 und 40 gerastet.

Im Gegensatz zu einer Nietverbindung ist eine solche Spreizverbindung einfach. Die Lagerhaltung entspricht der Lagerhaltung der Niete; lediglich die Montage ist vereinfacht, weil ein zusätzlicher Nietvorgang vermieden ist.

Der Innenraum der Hülle muß nicht kreiszylinderförmig sein; der Innenraum kann auch durch zwei etwa parallele Wände begrenzt sein. Die Kreizylinderform wird bevorzugt dann angewendet, wenn die Möglichkeit besteht, daß der Zapfen eingesteckt werden muß. Aus Gründen der Lagerhaltung ist die Kreizylinderform sinnvoll, da dann nur eine Art eines Verbindungselementes auf Lager gehalten werden kann.

## Patentansprüche

1. Verbindungselement (33) für zwei nebeneinander angereihte, mit ihren Breitseiten aneinanderliegende Installationsgeräte(10, 11), insbesondere
Leitungsschutzschalter, Fehlerstromschutzschalter und dgl., deren Gehäuse aus je zwei schalenartigen Gehäuseteilen (12, 13; 14, 15) gebildet sind, wobei das Verbindungselement (33) einen etwa zylinderförmigen Grundkörper (34) mit einem ersten Außendurchmesser aufweist, an dem beidseitig je zwei radial auffedernde,
axial in entgegengesetzte Richtungen vorspringende Spreizarme (37 bis 40) angeformt sind, deren Außendurchmesser kleiner ist als der Außendurchmesser des Grundkörpers (34), und deren freie Enden auf entgegengesetzt liegenden Mantellinien radial vorspringende Nasen (41, 42, 43, 44) aufweisen, die im montierten Zustand hinter Rücksprüngen (58, 57) an den mit dem Verbindungselement zu verbindenden Gehäusen der nebeneinander liegenden Installationsgeräte (10, 11) einrastet, **dadurch gekennzeichnet, dass** das Verbindungselement (33) eine Hülsenform aufweist, die einen durchgängigen axialen Längsschlitz (46) besitzt, der mittig zwischen den beiden die Nase (41, 42, 43,44) tragenden Mantelbereichen angeordnet ist.

2. Verbindungselement nach Anspruch 1, **dadurch gekennzeichnet, daß** die freien Enden der Nasen (41 bis 44) konisch zugespitzt sind.

3. Verbindungselement nach einem der vorherigen Ansprüche, **dadurch gekennzeichnet, daß** die Stirnflächen (35, 36) des Grundkörpers (34), an denen die Spreizarme (37 bis 40) angeformt sind, stumpf konisch ausgebildet sind, wobei die Konuswinkel gegeneinander geöffnet sind, und daß der Konuswinkel geringfügig kleiner ist als 180°

4. Verbindungsvorrichtung nach Anspruch 3, **dadurch gekennzeichnet, daß** die den Stirnflächen (35, 36) gegenüberliegenden Rückenflächen (49, 50) der Nasen (41 bis 44) eine Konusform aufweisen, deren Konuswinkel in entgegengesetzter Richtung offen ist und ebenfalls geringfügig kleiner als 180° ist.

5. Verbindungselement nach einem der vorherigen Ansprüche, **dadurch gekennzeichnet, daß** zur Festlegung und zur Vermeidung von Federungen der Spreizarme (37 bis 40) aufeinanderzu ein Zapfen (55) ins Innere der Hülse gesetzt ist.

6. Verfahren zum Verbinden zweier Installationsgeräte mit einem Verbindungselement nach einem der Ansprüche 1 bis 6, **dadurch gekennzeichnet, daß** in an der einen Breitseite angeordnete Öffnungen mit Rücksprüngen eines ersten Installationsgerätes je ein Verbindungselement eingerastet wird und daß ein zweites Installationsgerät senkrecht zur Breitseite gegen das erste Installationsgerät gedrückt wird, wobei jedes Verbindungselement in Öffnungen mit Rücksprüngen an der anderen Breitseite des zweiten Installationsgerätes eingreift.

## Claims

1. A connection element (33) for connecting two installation apparatuses (10, 11) arranged one next to another with their broad sides contacting one another, particularly circuit breakers, differential residual current circuit breakers and the like, the casings of which are formed in each case by two shell-shaped casing parts (12, 13; 14, 15), the connection element (33) having an approximately cylindrical base body (34) with a first outer diameter, wherein on both sides there are formed in each case two radially springing extensions(37 to 40) projecting axially in opposite directions, the outer diameter of which is much smaller than the outer diameter of the base body (34) and the free ends of which have radially protruding projections (41, 42, 43, 44) located opposite one another on contour lines, which in the assembly state are fitted behind recesses (58, 57) in the casings which will be connected to the connection element of the installation apparatuses (10, 11) arranged one next to another, **characterized in that** the connection element (33) is in the shape of a bushing having a continuous axial longitudinal notch (46) which is centrally arranged between both contour areas supporting the projection (41, 42, 43, 44).

2. The connection element according to claim 1, **characterized in that** the free ends of the projections (41 to 44) have a conical tip.

3. The connection element according to one of the preceding claims, **characterized in that** the front surfaces (35, 36) of the base body (34) in which the extensions (37 to 40) are formed are obtuse and cone-shaped, the cone angles being open with respect to one another, and **in that** the cone angle is slightly less than 180°.

4. The connection device according to claim 3, **characterized in that** the back surfaces (49, 50) of the projections (41 to 44) opposite the front surfaces (35, 36) have a cone shape the cone angle of which is open in the opposite direction and is also slightly less than 180°.

5. The connection element according to one of the preceding claims, **characterized in that** in order to fix and to avoid the springing of the extensions (37 to 40) towards one another a pin (55) is placed inside the bushing.

6. A method for connecting two installation apparatuses with a connection element according to one of claims 1 to 6, **characterized in that** in each case a connection element is fitted into openings with recesses arranged on a broad side of a first installation apparatus and **in that** a second installation apparatus is vertically pushed towards the broad side against the first installation apparatus, each connection element being engaged in openings with recesses on the other broad side of the second installation apparatus.

## Revendications

1. Elément (33) de connexion pour deux appareils (10, 11) d'installation disposés l'un à côté de l'autre avec leurs côtés larges en contact entre eux, en particulier des interrupteurs automatiques, des interrupteurs différentiels résiduaires et analogues, dont les carcasses sont formées dans chaque cas par deux parties (12, 13; 14, 15) de carcasse sous forme de coquille, l'élément (33) de connexion présentant un corps (34) de base ayant une forme à peu près cylindrique avec un premier diamètre extérieur, dans lequel sur les deux côtés sont conformés dans chaque cas deux extensions (37 à 40) de rappel élastique radial qui sont axialement en porte-à-faux en direction opposée dont le diamètre extérieur est plus petit que le diamètre extérieur du corps (34) de base et dont les extrémités libres présentent sur des lignes de contours situées en regard des saillies (41, 42, 43, 44) radialement en porte-à-faux, qui une fois montées s'emboîtent derrière des évidements (58, 57) dans les carcasses qui vont se connecter à l'élément de connexion des appareils (10, 11) d'installation disposés l'un à côté de l'autre, **caractérisé en ce que** l'élément (33) de connexion présente une forme de douille ayant une rainure (46) longitudinale axiale continue qui est disposée de manière centrale entre les deux zones de contours qui supportent la saillie (41, 42, 43, 44).

2. Élément de connexion selon la revendication 1, **caractérisé en ce que** les extrémités libres des saillies (41 à 44) ont une pointe conique.

3. Élément de connexion selon une des revendications précédentes, **caractérisé en ce que** les surfaces (35, 36) avant du corps (34) de base, où sont conformés les extensions (37 à 40), sont configurées de manière obtuse et conique, les angles de cône étant ouverts l'un par rapport à l'autre, et **en ce que** l'angle de cône est légèrement inférieur à 180°.

4. Dispositif de connexion selon la revendication 3, **caractérisé en ce que** les surfaces (49, 50) arrière des saillies (41 a 44), opposées aux surfaces (35, 36) avant présentent une forme conique dont l'angle de cône est ouvert en direction opposée et est aussi légèrement inférieur à 180°.

5. Élément de connexion selon une des revendications précédentes, **caractérisé en ce que** pour fixer et éviter le déplacement des bras (37 à 40) extensibles les uns vers les autres, un tourillon (55) est mis en place à l'intérieur de la douille.

6. Procédé de connexion de deux appareils d'installation avec un élément de connexion selon une des revendications 1 à 6, **caractérisé en ce que** dans des ouvertures avec des évidements aménagées sur un côté large d'un premier appareil d'installation est emboîté dans chaque cas un élément de connexion et **en ce qu'**un deuxième appareil d'installation est poussé verticalement vers le côté large contre le premier appareil d'installation, chaque élément de connexion s'accouplant dans des ouvertures avec évidements dans le côté large du deuxième appareil d'installation.
